# EUROPÄISCHE PATENTANMELDUNG

(11) **EP 4 708 616 A1**
(43) Veröffentlichungstag der Anmeldung: **11.03.2026**
(21) Anmeldenummer: 25186930.1
(22) Anmeldetag: 02.07.2025
(51) Int. Cl.: H02J 7/00, H02J 50/00, H02J 50/10

(54) **ANORDNUNG UMFASSEND EIN INSTALLATIONSGERÄT UND EIN INDUKTIVES LADEGERÄT, SOWIE VERFAHREN ZUM INDUKTIVEN LADEN EINES ENDGERÄTES**

(30) Priorität: 05.09.2024 DE 102024125415
(71) Anmelder: Albrecht Jung GmbH & Co. KG, 58579 Schalksmühle (DE)
(72) Erfinder: Wiesing, Dietmar, 58553 Halver (DE); Biniossek, Nik, 58099 Hagen (DE)

(57) **Zusammenfassung**

Vorgestellt wird eine Anordnung umfassend ein, mindestens eine Öffnung SÖ aufweisendes, Installationsgerät S der Gebäudeinstallationstechnik sowie ein induktives Ladegerät L zum Laden eines mobilen Endgerätes, umfassend eine Ladespule, die hinter einer auf der Vorderseite V des induktiven Ladegerätes L angeordneten Ladeplatte LP angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, **dadurch gekennzeichnet,** dass an das Installationsgerät S der Gebäudeinstallationstechnik ein Adapter AD angeschlossen ist, an den das induktive Ladegerät L über Koppelelemente KE reversibel mechanisch angekoppelt ist.

## Beschreibung

Die Erfindung betrifft eine Anordnung umfassend ein, mindestens eine Öffnung aufweisendes Installationsgerät der Gebäudeinstallationstechnik sowie ein induktives Ladegerät zum Laden eines mobilen Endgerätes, umfassend eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche.

Ferner betrifft die Erfindung ein Verfahren zum induktiven Laden eines mobilen Endgerätes mit der erfindungsgemäßen Anordnung.

Klassische, unter dem Produktnamen beziehungsweise der Marke MagSafe^{®} vorbekannte, induktive Ladegeräte weisen zum Laden eines mobilen Endgerätes eine Ladespule, die hinter einer auf der Vorderseite des induktiven Ladegerätes angeordneten Ladeplatte angeordnet ist, einen elektrischen Anschluss zum Anschluss an eine Energieversorgung sowie einen Haltemagneten zum Halten eines mobilen Endgerätes auf (*www.apple.com*/*de*/*shop*/*product*/*MHXH3ZM*/*A*/*magsafe-ladegerät?fnode=29611cce37f8e0f1f08e4d5d14d01deb871baad43ad21b7 df6c4ccb5d331efbb6ad88290dd94bd8df05c792cdcbff11bf7f2c472a68766 3655b127bc778ceaf27bd64b4d7c766633f3f96b12bd1f7277654d4165481 2212293cf39021 afe 1 c2004001 0 1449bf5b465ef11 b54054c892cabdd7 d42 40dd636453bcc17583988594*)*.*

Problematisch bei diesen Lösungen ist, dass sie ein separates Netzteil und ein entsprechendes Ladekabel zum Verbinden des Netzteils und Ladeelektronik erfordern. Derartige Ladekabel stehen im Widerspruch zum "wireless charging", da statt des mobilen Endgerätes ein Kabel an das Ladegerät angeschlossen werden muss. Insofern ist die Handhabung durch ein erforderliches Ladekabel erschwert. Zum Anbringen des induktiven Ladegerätes, insbesondere des sogenannten MagSafe^{®}, sind auch Wandhalterungen bekannt. Hierdurch wird jedoch das Kabel nicht entbehrlich, sondern hängt auffällig an der Wand zu einer Steckdose oder muss durch optisch auffällige Maßnahmen versteckt/verkleidet werden, so dass der ästhetische Gesamteindruck beeinträchtig wird.

Alternativ sind induktive Ladegeräte zum Laden eines mobilen Endgerätes bekannt, die in eine Installationsdose montiert werden können, beispielsweise aus EP 3 826 279 B1. Nachteilig dabei ist, dass diese eine enorme Installationshürde aufweisen, da entweder eine Installationsdose installiert werden muss oder bestehende Geräte aufwendig komplett ausgebaut und gegen das induktive Ladegerät (als Neugerät) getauscht werden müssen. Zudem wird die Stabilität einer solchen Anordnung als suboptimal angesehen.

Ausgehend von diesem diskutierten Stand der Technik liegt der Erfindung die Aufgabe zugrunde, ein induktives Ladegerät zum Laden eines mobilen Endgerätes zu schaffen, das es ermöglicht, ein echtes "wireless charging"-Erlebnis zu ermöglichen; mithin ohne Kabel auskommt, gleichzeitig besonders einfach und stabil zu installieren ist und es optisch besonders kompakt und unauffällig ermöglicht, ein mobiles Endgerät parallel zu einer Wand- und/oder Möbeloberfläche zu laden.

Gelöst wird diese Aufgabe durch ein induktives Ladegerät zum Laden eines mobilen Endgerätes, wobei an das Installationsgerät der Gebäudeinstallationstechnik ein Adapter angeschlossen ist, an den das induktive Ladegerät über Koppelelemente reversibel mechanisch angekoppelt ist.

Ein solches erfindungsgemäßes induktives Ladegerät zum Laden eines mobilen Endgerätes umfasst eine Ladespule, die hinter einer auf der Vorderseite des induktiven Ladegerätes angeordneten Ladeplatte angeordnet ist, optional ein Netzteil, sowie einen Haltemagneten (regelmäßig ringförmig oder zumindest teilweise ringförmig ausgebildet) zum Halten eines mobilen Endgerätes parallel zu einer Wand- und/oder Möbeloberfläche. Zum elektrischen Anschluss an eine Energieversorgung weist das induktive Ladegerät beispielsweise einen kabellosen, an die Rückseite des induktiven Ladegerätes angeformten Stecker zum Einstecken in die mindestens eine Öffnung auf.

Bei der erfindungsgemäßen Anordnung kommt auf besonders vorteilhafte Weise ein Adapter, der an das Installationsgerät der Gebäudeinstallationstechnik angeschlossen ist, zum Einsatz. Durch diesen Anschluss, beispielsweise ein Verschrauben oder ein Verrasten, wird es auf intelligente Weise ermöglicht, das induktive Ladegerät über Koppelelemente reversibel mechanisch an das Installationsgerät anzukoppeln. Dieses stellt im Vergleich zu einem lediglich mittels eines Steckers in das Installationsgerät eingesteckten Installationsgerät eine erhebliche Verbesserung der Stabilität des Anschlusses dar, so dass ein Wackeln oder Herausziehen des induktiven Ladegerätes - insbesondere beim Abziehen des mobilen Endgerätes vom induktiven Ladegerät - wirksam vermieden wird. Gleichzeitig wird durch die reversible mechanische Kopplung ein Umbau eines Installationsgerätes von einem solchen, das eine induktive Ladefunktion besitzt, zu einem solchen, das diese Funktionalität nicht mehr aufweist, signifikant erleichtert (da ein vollständiger Ausbau des Installationsgerätes entbehrlich wird). Damit wird es auf einmalig geschickte Art und Weise ermöglicht, dem Anwender durch Verwenden einer Mehrzahl von kostengünstigen Adaptern, die an Installationsgeräten durch Verschrauben oder Verrasten festlegbar sind, ein einziges induktives Ladegerät für unterschiedliche Installationsgeräte zu nutzen - und zwar ohne Wackeln des Ladegerätes, einer einfachen Installation und wenig Kosten, da der Adapter besonders kostengünstig ist.

**In** einer bevorzugten Ausgestaltung der erfindungsgemäßen Anordnung ist das Installationsgerät der Gebäudeinstallationstechnik als Steckdose oder als USB-Steckdose ausgeführt.

Gemäß einer bevorzugten Ausgestaltung der erfindungsgemäßen Anordnung ist das Installationsgerät der Gebäudeinstallationstechnik als USB-Ladesteckdose ausgeführt.

Gemäß einer bevorzugten Ausgestaltung der erfindungsgemäßen Anordnung ist der Adapter an das Installationsgerät der Gebäudeinstallationstechnik geschraubt, insbesondere an einen bereits vorhandenen Dom des Installationsgerätes der Gebäudeinstallationstechnik. Dabei wird ausgenutzt, dass einerseits zahlreiche Installationsgeräte der Gebäudeinstallationstechnik einen Dom zur Festlegung einer Zentralplatte aufweisen und andererseits ein Verschrauben besonders stabil, zuverlässig und reversibel hinsichtlich der mechanischen Verbindung zwischen Installationsgerät und Adapter ist. Besonders vorteilhafterweise weist der Adapter eine Ausnehmung auf, die nach der Art eines Langloches, unterschiedliche Positionen des Doms des Installationsgerätes abdeckt beziehungsweise ein Festlegen des Adapters am Installationsgerät eröffnet. Damit wird erreicht, dass die Kompatibilität von Adapter zu Installationsgerät erhöht wird, so dass der Kreis der potenziellen Anwender der erfindungsgemäßen Anordnung wirksam und kostengünstig erweitert wird. Dabei wird zum Beispiel ausgenutzt, dass die Dome der Installationsgeräte typischerweise symmetrisch, also im mittleren Bereich (wenn auch in einer unterschiedlichen Höhe, was durch die vorbeschriebene Ausnehmung, die unterschiedliche Positionen des Doms des Installationsgerätes abdeckt, abgebildet wird), angeordnet sind.

In einer anderen Ausführungsform der erfindungsgemäßen Anordnung ist der Adapter an das Installationsgerät der Gebäudeinstallationstechnik gerastet. Damit wird eine werkzeuglose Montage des Adapters ermöglicht.

In einer weiteren außerordentlich bevorzugten Ausführungsform der erfindungsgemäßen Anordnung sind die Koppelelemente als Rastelemente ausgeführt. Damit wird es ermöglicht, das induktive Ladegerät werkzeuglos an den Adapter anzuschließen, so dass auch ein Wechsel des induktiven Ladegerätes von einem, (lediglich) einen (kostengünstigen) Adapter aufweisenden, Installationsgerät zu einem anderen, einen Adapter aufweisenden, Installationsgerät werkzeuglos und einfach ermöglicht wird.

In einer weiteren Ausführungsform der erfindungsgemäßen Anordnung ist der elektrische Anschluss des induktiven Ladegerätes als ein kabelloser, an die Rückseite des induktiven Ladegerätes angeformter Stecker zum Einstecken in die Öffnung des Installationsgerätes ausgeführt, wobei zwischen der Ladeplatte und den Steckerstiften eine Zentralplatte angeordnet ist.

Insofern wird besonders intelligent bei dem erfindungsgemäßen induktiven Ladegerät bevorzugt auf einen kabellosen, an die Rückseite des induktiven Ladegerätes angeformten Stecker zum Einstecken in einen Steckdosensockel zurückgegriffen. Der kabellose Stecker ist dabei direkt an die Rückseite des induktiven Ladegerätes angeformt (einteilig oder mehrteilig ausgeführt), so dass kein unerwünschtes Kabel erforderlich ist. Gleichzeitig erlaubt das erfindungsgemäße induktive Ladegerät hierdurch eine besonders flexible Nutzung an jedweder Steckdose: Zur Installation des induktiven Ladegerätes muss dieses mit seinem Stecker lediglich in die Steckdosensockelöffnungen eingesteckt werden. Insbesondere entfällt ein Anschluss eines Netzteils an eine Steckdose via Stecker, sowie der Anschluss eines Netzteils an eine induktive Ladestation via Ladekabel. Damit wird die Installation deutlich vereinfacht. Auch ist im Gegensatz zu vorbekannten induktiven Ladegeräten, die in eine Installationsdose als Neugerät montiert werden, die Installationshürde substanziell abgesenkt. Besonders vorteilhaft dabei ist die durch die kompakte Bauform bedingte Optik des induktiven Ladegerätes, da die Zentralplatte des induktiven Ladegerätes gegen die Zentralplatte einer Steckdose getauscht wird. So wird die Optik eines Installationsgerätes der Gebäudeinstallationstechnik erreicht, wobei das induktive Ladegerät, das an einem Steckdosensockel festgelegt ist, den Eindruck eines Drehdimmers hervorruft und sich somit harmonisch in ein bestehendes Installationsgeräteprogramm einfügt.

In einer Weiterbildung der vorbeschriebenen erfindungsgemäßen Anordnung weist der Stecker eine Durchgangsöffnung auf, durch die eine Zentralschraube hindurchgreift, so dass der Stecker des induktiven Ladegerätes an einem Dom des Installationsgerätes der Gebäudeinstallationstechnik festgelegt ist. Dabei fungiert der Stecker als Adapter.

Ferner betrifft die Erfindung ein Verfahren zum induktiven Laden eines mobilen Endgerätes mit der erfindungsgemäßen Anordnung, umfassend die Schritte:
- Einsetzen des induktiven Ladegerätes in die Öffnung des Installationsgerätes der Gebäudeinstallationstechnik, wobei das induktive Ladegerät an den Adapter reversibel mechanisch gekoppelt ist,
- Befestigen des zu ladenden mobilen Endgerätes an dem induktiven Ladegerät unter Ausnutzung der magnetischen Haltekraft, die zwischen dem Haltemagneten des induktiven Ladegerätes und dem mobilen Endgerät wirkt,
- Starten des Ladevorgangs.

In einer bevorzugten Ausführungsform des erfindungsgemäßen Verfahrens wird in einem ersten Schritt der Adapter an dem Installationsgerät festgelegt, insbesondere verschraubt oder verrastet.

Nachfolgend ist die Erfindung unter Bezugnahme auf die beigefügten Figuren anhand diverser Ausführungsbeispiele beschrieben. Es zeigen:
- **Fig. 1:**: eine schematische perspektivische Darstellung einer Ausgestaltung einer ersten erfindungsgemäßen Anordnung, und
- **Fig. 2:**: eine schematische perspektivische Darstellung einer Ausgestaltung einer zweiten erfindungsgemäßen Anordnung.

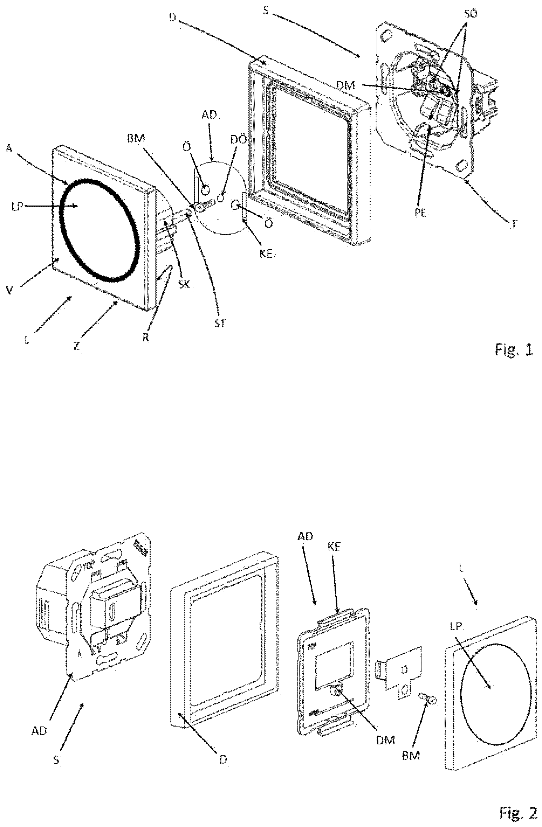

Eine in Figur 1 gezeigte erste erfindungsgemäße Anordnung umfasst einen, Öffnungen SÖ aufweisenden, Steckdosensockel S sowie ein induktives Ladegerät L. Ferner weist der dargestellte Steckdosensockel S Erdungsbügel PE und einen Tragring T auf, beispielsweise um den Steckdosensockel S an einer Installationsdose festzulegen. Der Tragring T wird von einem Designrahmen D umlaufend abgedeckt.

Der elektrische Anschluss des induktiven Ladegerätes L ist als ein, an die Rückseite R des induktiven Ladegerätes L angeformter, kabelloser Stecker, der in den Steckdosensockel S der, zwei Erdungsbügel PE aufweisenden, Steckdose eingesteckt ist, ausgeführt. Vorliegend ist der Stecker als Schukostecker SK ausgeführt und weist zwei Steckerstifte ST zum Einführen in Öffnungen SÖ auf. Die Ladeplatte LP ist auf der Vorderseite V des induktiven Ladegerätes L angeordnet und weist bevorzugt einen Absatz A mit einer Höhe von mindestens 4 mm, bevorzugt maximal 6 mm auf, wobei der Absatz A zu einer Zentralplatte Z ausgeführt ist. Ein solcher Absatz A führt dazu, dass die vorstehende Kamera eines mobilen Endgerätes nicht auf der Ladeplatte aufliegt, was die Haltekraft verringern und den Ladeprozess verschlechtern würde.

Durch eine solche erfindungsgemäße Anordnung wird ein echtes "wireless charging"-Erlebnis ermöglicht, das ohne Kabel auskommt. Gleichzeitig erlaubt die Ausführung des induktiven Ladegerätes L mit einem an die Rückseite R des induktiven Ladegerätes L angeformten, kabellosen Stecker, ein Einstecken in den Steckdosensockel S mit einer Hand. Zudem wird dadurch auch eine einfache Demontage ermöglicht, insbesondere, um das induktive Ladegerät L flexibel in einer anderen Steckdose zu installieren. Die vorgenannten Vorteile werden dabei erreicht, ohne dass die typische Installationsgeräteanmutung beeinträchtigt wird, da die erfindungsgemäße Anordnung durch den kabellosen Stecker und den Absatz A besonders kompakt und unauffällig ist, um ein mobiles Endgerät parallel zu einer Wand- und/oder Möbeloberfläche zu laden.

Vorliegend ist das Installationsgerät eine Steckdose, wobei der Adapter AD mittels eines Befestigungsmittels BM an dem Dom DM des Steckdosensockels S geschraubt ist, wobei der Adapter AD eine Domöffnung DÖ für das Befestigungsmittel BM aufweist. Die Koppelelemente KE stellen ein Halten, beispielsweise durch Verrasten, des induktiven Ladegerätes L sicher. Der Adapter weist vorliegend Durchgangsöffnungen Ö auf, so dass die Steckerstifte ST durch diese hindurchgreifen können.

Dadurch wird sowohl beim Halten des mobilen Endgerätes parallel zu einer Wand- und/oder Möbeloberfläche als auch ohne ein Halten des mobilen Endgerätes ein optischer Eindruck vermittelt, der sich von einem typischen Installationsgerät nicht unterscheidet, da das zylindrische induktive Ladegerät L exakt wie etablierte, bekannte Drehbedienelemente von Drehdimmern aussieht, so dass der Betrachter davon ausgeht, dass ein klassisches Installationsgerät vorliegt und kein klassisches - durch Kabel und ein bauraumbeanspruchendes Aufputz-angeordnetes Netzteil den optischen Gesamteindruck beeinträchtigendes - Ladegerät L, das in eine Steckdose eingesteckt ist.

Figur 2 zeigt eine USB-Ladesteckdose, an die analog zu Figur 1 ein induktives Ladegerät L mittels Adapter AD angeschlossen ist. Dabei ist der Stecker mittels eines Befestigungsmittels BM an den Dom DM des Adapters AD anschraubbar. Da das Netzteil im Sockel der USB-Ladesteckdose untergebracht ist, kann das induktive Ladegerät L besonders kompakt und kostengünstig ausgeführt werden. Auch verringern sich hierdurch die Zulassungskosten.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Absatz
- AD: Adapter
- BM: Befestigungsmittel
- D: Designrahmen
- DM: Dom
- DÖ: Domöffnung
- KE: Koppelelemente
- L: Ladegerät
- LP: Ladeplatte
- Ö: Durchgangsöffnung
- PE: Erdungsbügel
- R: Rückseite
- S: Steckdosensockel
- SK: Schuko-Stecker
- SÖ: Öffnungen
- ST: Steckerstift
- T: Tragring
- V: Vorderseite
- Z: Zentralplatte

## Patentansprüche

1. Anordnung umfassend ein, mindestens eine Öffnung (SÖ) aufweisendes, Installationsgerät (S) der Gebäudeinstallationstechnik sowie ein induktives Ladegerät (L) zum Laden eines mobilen Endgerätes, umfassend eine Ladespule, die hinter einer auf der Vorderseite (V) des induktiven Ladegerätes (L) angeordneten Ladeplatte (LP) angeordnet ist, einen elektrischen Anschluss zum Anschluss an eine Energieversorgung sowie einen Haltemagneten zum Halten eines mobilen Endgerätes parallel zu einer Wand- und/oder Möbeloberfläche, **dadurch gekennzeichnet, dass** an das Installationsgerät (S) der Gebäudeinstallationstechnik ein Adapter (AD) angeschlossen ist, an den das induktive Ladegerät (L) über Koppelelemente (KE) reversibel mechanisch angekoppelt ist.

2. Anordnung nach Anspruch 1, **dadurch gekennzeichnet, dass** das Installationsgerät (S) der Gebäudeinstallationstechnik als Steckdose oder als USB-Steckdose ausgeführt ist.

3. Anordnung nach Anspruch 1, **dadurch gekennzeichnet, dass** das Installationsgerät (S) der Gebäudeinstallationstechnik als USB-Ladesteckdose ausgeführt ist.

4. Anordnung nach einem der Ansprüche 1 bis 3, **dadurch gekennzeichnet, dass** der Adapter an das Installationsgerät (S) der Gebäudeinstallationstechnik, insbesondere an einen bereits vorhandenen Dom (DM) des Installationsgerätes (S) der Gebäudeinstallationstechnik, geschraubt ist.

5. Anordnung nach einem der Ansprüche 1 bis 3, **dadurch gekennzeichnet, dass** der Adapter an das Installationsgerät (S) der Gebäudeinstallationstechnik gerastet ist.

6. Anordnung nach einem der Ansprüche 1 bis 5, **dadurch gekennzeichnet, dass** die Koppelelemente (KE) als Rastelemente ausgeführt sind.

7. Anordnung nach einem der Ansprüche 1 bis 6, **dadurch gekennzeichnet, dass** der elektrische Anschluss des induktiven Ladegerätes (L) als ein kabelloser, an die Rückseite (R) des induktiven Ladegerätes (L) angeformter Stecker zum Einstecken in die Öffnung (SÖ) des Installationsgerätes ausgeführt ist, wobei zwischen der Ladeplatte (LP) und den Steckerstiften (ST) eine Zentralplatte (Z) angeordnet ist.

8. Anordnung nach Anspruch 7, **dadurch gekennzeichnet, dass** der Stecker eine Durchgangsöffnung aufweist, durch die ein Befestigungsmittel (BM) hindurchgreift, so dass der Stecker des induktiven Ladegerätes (L) an einem Dom (DM) des Installationsgerätes der Gebäudeinstallationstechnik (S), festgelegt ist.

9. Anordnung nach einem der Ansprüche 1 bis 8, **dadurch gekennzeichnet, dass** die Ladeplatte (LP) einen Absatz (A) mit einer Höhe von mindestens 4 mm aufweist.

10. Verfahren zum induktiven Laden eines mobilen Endgerätes mit der Anordnung gemäß einem der Ansprüche 1 bis 9, umfassend die Schritte:
- Einsetzen des induktiven Ladegerätes (L) in die Öffnung (SÖ) des Installationsgerätes der Gebäudeinstallationstechnik, wobei das induktive Ladegerät (L) an den Adapter (AD) reversibel mechanisch gekoppelt ist,
- Befestigen des zu ladenden mobilen Endgerätes an dem induktiven Ladegerät (L) unter Ausnutzung der magnetischen Haltekraft, die zwischen dem Haltemagneten des induktiven Ladegeräts (L) und dem mobilen Endgerät wirkt,
- Starten des Ladevorgangs.

11. Verfahren nach Anspruch 10, wobei in einem ersten Schritt der Adapter (AD) an dem Installationsgerät festgelegt, insbesondere verschraubt oder verrastet, wird.
